(19) Europäisches Patentamt
European Patent Office
Office européen des brevets

(11) EP 4 773 309 A1

(12) **EUROPEAN PATENT APPLICATION**
published in accordance with Art. 153(4) EPC

(43) Date of publication:
**08.07.2026 Bulletin 2026/28**

(21) Application number: **24860149.4**

(22) Date of filing: **04.07.2024**

(51) International Patent Classification (IPC):
***H01M 10/0569*** *(2010.01)* ***H01M 10/0568*** *(2010.01)*
***H01M 10/42*** *(2006.01)* ***H01M 10/052*** *(2010.01)*

(52) Cooperative Patent Classification (CPC):
**H01M 10/052; H01M 10/0568; H01M 10/0569; H01M 10/42;** Y02E 60/10

(86) International application number:
**PCT/KR2024/009494**

(87) International publication number:
**WO 2025/048226 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.08.2023 KR 20230115626**
**05.03.2024 KR 20240031319**

(71) Applicants:
- **Libest Inc.**
  **Daejeon 34002 (KR)**
- **Korea University Research and Business Foundation**
  **Seoul 02841 (KR)**

(72) Inventors:
- **KIM, Joo Seong**
  **Daejeon 34002 (KR)**
- **YOO, Dong Joo**
  **Seoul 02798 (KR)**
- **LIM, Seung Gyu**
  **Gwangju 61424 (KR)**
- **KIM, Seon Kyong**
  **Daejeon 34304 (KR)**
- **KOO, Ju Hyun**
  **Daejeon 35228 (KR)**
- **HWANG, Jae Ho**
  **Daejeon 34307 (KR)**

(74) Representative: **Brann AB**
**P.O. Box 3690**
**Sveavägen 63**
**103 59 Stockholm (SE)**

(54) **COMPOSITION FOR NON-AQUEOUS ELECTROLYTE, AND ELECTROCHEMICAL CELL COMPRISING COMPOSITION**

(57) The present disclosure relates to a non-aqueous electrolyte composition including a mixed solvent and selectively containing dual lithium salts, and to an electrochemical cell including the same.

EP 4 773 309 A1

# Description

## TECHNICAL FIELD

The present disclosure relates to a non-aqueous electrolyte composition including a mixed solvent and selectively containing dual lithium salts, and to an electrochemical cell including the same.

## BACKGROUND

Demand for high-energy-density secondary batteries as energy sources has been increasing not only for electronic devices, such as mobile phones, camcorders, and notebook PCs, but also for mobility applications, such as drones (including air taxis) and electric vehicles. Accordingly, extensive research has been actively conducted on lithium secondary batteries capable of satisfying such demand.

In general, commercialized lithium secondary batteries include an electrolyte in which a lithium salt and an organic solvent are mixed, and the organic solvent forming the electrolyte is selected from carbonate solvents in consideration of electrical properties and chemical stability.

However, conventional electrochemical cells including carbonate solvents exhibit unstable charge characteristics at temperatures of 0°C or lower, which increases the likelihood of safety-related issues. As a result, the electrochemical cells are designed to restrict charging, and particularly at low temperatures of -20°C or lower, serious problems arise such as a significant decrease in discharge capacity and a rapid deterioration of cycle life. Accordingly, there is a need to develop an electrolyte that is stable even at low temperatures, has excellent flame retardancy and heat resistance, and exhibits superior high-rate charge and discharge characteristics, thereby enabling stable operation of electrochemical cells in various environments.

## PRIOR ART DOCUMENT

Patent Document 1: Korean Patent No. 10-0810634

## DISCLOSURE OF THE INVENTION

## PROBLEMS TO BE SOLVED BY THE INVENTION

The present disclosure is conceived to provide a non-aqueous electrolyte composition that is stable even at low temperatures, has excellent flame retardancy and heat resistance, and particularly exhibits superior high-rate charge and discharge characteristics, and an electrochemical cell including the same.

However, the problems to be solved by the present disclosure are not limited to the above-described problems. Although not described herein, other problems to be solved by the present disclosure can be clearly understood by a person with ordinary skill in the art from the following descriptions.

## MEANS FOR SOLVING THE PROBLEMS

A first aspect of the present disclosure provides a non-aqueous electrolyte composition including: a lithium salt; a first organic solvent including at least one selected from cyclic carbonate compounds and cyclic ester compounds; and a second organic solvent including a compound containing an ether group and an ester group.

A second aspect of the present disclosure provides an electrochemical cell including: a positive electrode; a negative electrode; a separator disposed between the positive electrode and the negative electrode; and the non-aqueous electrolyte composition according to the first aspect.

## EFFECTS OF THE INVENTION

A non-aqueous electrolyte composition according to an embodiment of the present disclosure includes a lithium salt and a mixed solvent in which a first organic solvent and a second organic solvent are mixed. By using the mixed solvent capable of minimizing a binding energy with lithium ions, the composition exhibits remarkably improved low-temperature characteristics compared to conventional carbonate electrolytes. Further, it exhibits superior high-rate charge and discharge characteristics.

In general, low-temperature characteristics and high-temperature characteristics of organic electrolytes are in a trade-off relationship. However, the non-aqueous electrolyte composition according to an embodiment of the present disclosure includes a mixed lithium salt, which selectively includes an imide-based lithium salt and a lithium salt different

therefrom, together with the mixed solvent. Accordingly, the composition exhibits improved low-temperature characteristics while maintaining excellent high-temperature characteristics, and further shows increased flame retardancy, thereby significantly enhancing safety.

## BRIEF DESCRIPTION OF THE DRAWINGS

## MODE FOR CARRYING OUT THE INVENTION

Hereinafter, example embodiments will be described in detail with reference to the accompanying drawings so that the present disclosure may be readily implemented by a person with ordinary skill in the art. However, it is to be noted that the present disclosure is not limited to the example embodiments but can be embodied in various other ways.

Throughout the whole document, the term "on" that is used to designate a position of one component with respect to another component includes both a case that the one component is adjacent to the other component and a case that any other component exists between these two components.

Further, it is to be understood that the term "comprises or includes" and/or "comprising or including" used in the document means that one or more other components, steps, operation and/or the existence or addition of elements are not excluded from the described components, steps, operation and/or elements unless context dictates otherwise; and is not intended to preclude the possibility that one or more other features, numbers, steps, operations, components, parts, or combinations thereof may exist or may be added. The term "about or approximately" or "substantially" are intended to have meanings close to numerical values or ranges specified with an allowable error and intended to prevent accurate or absolute numerical values disclosed for understanding of the present disclosure from being illegally or unfairly used by any unconscionable third party. Throughout the whole document, the term "step of" does not mean "step for."

Throughout the whole document, the term "combination(s) of" included in Markush type description means mixture or combination of one or more components, steps, operations and/or elements selected from a group consisting of components, steps, operation and/or elements described in Markush type and thereby means that the disclosure includes one or more components, steps, operations and/or elements selected from the Markush group.

Throughout the whole document, a phrase in the form "A and/or B" means "A or B, or A and B."

Hereinafter, embodiments and examples of the present disclosure will be described in detail with reference to the accompanying drawings. However, the present disclosure may not be limited to the following embodiments, examples, and drawings.

A first aspect of the present disclosure provides a non-aqueous electrolyte composition including: a lithium salt; a first organic solvent including at least one selected from a cyclic carbonate compound and a cyclic ester compound; and a second organic solvent including a compound containing an ether group and an ester group.

Conventional non-aqueous electrolyte compositions include organic solvents mixed with carbonate solvents, such as ethylene carbonate (EC), propylene carbonate (PC), dimethyl carbonate (DMC), ethyl methyl carbonate (EMC), and diethyl carbonate (DEC). However, conventional electrolytes containing the carbonate solvents show a sharp degradation in electrochemical cell performance at temperatures below -15°C. In particular, at temperatures below -20°C, a discharge voltage of an electrochemical cell decreases significantly, and, thus, electronic devices cannot operate.

To solve this problem, electrolytes have been proposed where nitrile-based solvents are added to the above-described organic solvents. However, there are still limitations in improving low-temperature characteristics, and such electrolytes have been observed to exhibit inferior high-temperature characteristics.

Meanwhile, the non-aqueous electrolyte composition of the present disclosure includes the lithium salt and the mixed solvent in which the first and second organic solvents are mixed, thereby remarkably improving low-temperature characteristics compared to conventional carbonate electrolytes. In particular, an electrochemical reaction rate is significantly improved even at cryogenic temperatures below -30°C. Thus, the non-aqueous electrolyte composition is more suitable for high-rate charging and discharging.

In general, low-temperature characteristics and high-temperature characteristics of organic electrolytes are in a trade-off relationship. However, the non-aqueous electrolyte composition according to an embodiment of the present disclosure exhibits improved low-temperature characteristics while maintaining high-temperature characteristics. Accordingly, the non-aqueous electrolyte composition enables stable electrochemical performance over a wide temperature range.

In an embodiment of the present disclosure, as described above, the non-aqueous electrolyte composition may include a mixed solvent including: the first organic solvent including at least one selected from cyclic carbonate compounds and cyclic ester compounds; and the second organic solvent including a compound containing an ether group and an ester group.

For example, the cyclic carbonate compound in the first organic solvent may include one or more selected from ethylene carbonate, propylene carbonate, butylene carbonate, vinylene carbonate, fluoroethylene carbonate, difluoroethylene carbonate, trifluoroethylene carbonate, tetrafluoroethylene carbonate, 3,3,3-trifluoropropylene carbonate, and

1-fluoropropylene carbonate.

The cyclic ester compound in the first organic solvent may include one or more selected from γ-butyrolactone, γ-valerolactone, σ-valerolactone, γ-caprolactone, ε-caprolactone, and 4-vinyl-1,3-dioxolan-2-one.

An electrolyte including the mixed solvent that includes the first organic solvent selected from the cyclic carbonate compounds and the cyclic ester compounds helps form a stable and functional Solid Electrolyte Interface (SEI) layer in an electrochemical cell. Due to its high dielectric constant, the electrolyte can effectively dissociate the lithium salt within the electrolyte.

Specifically, the first organic solvent enables the SEI layer to be stably formed on an electrode layer, thereby effectively suppressing side reactions between the electrolyte and the electrode.

In a preferred example, the first organic solvent may include at least one selected from the cyclic carbonate compounds. Specifically, the first organic solvent may include one or more fluorinated cyclic carbonate compounds selected from: fluoroethylene carbonate, difluoroethylene carbonate, trifluoroethylene carbonate, tetrafluoroethylene carbonate, 3,3,3-trifluoropropylene carbonate, and 1-fluoropropylene carbonate.

Since the first organic solvent includes the fluorinated cyclic carbonate compound containing fluorine atoms as described above, it is advantageous in that it can stably form an SEI layer while improving thermal stability and electrochemical oxidation resistance of the electrolyte.

In an embodiment of the present disclosure, the content of the first organic solvent, based on the total volume of the mixed solvent, may be 5 vol% to 50 vol%, 10 vol% to 50 vol%, 15 vol% to 50 vol%, 20 vol% to 50 vol%, 5 vol% to 45 vol%, 10 vol% to 45 vol%, 15 vol% to 45 vol%, 20 vol% to 45 vol%, 5 vol% to 40 vol%, 10 vol% to 40 vol%, 15 vol% to 40 vol%, 20 vol% to 40 vol%, 5 vol% to 35 vol%, 10 vol% to 35 vol%, 15 vol% to 35 vol%, 20 vol% to 35 vol%, 5 vol% to 30 vol%, 10 vol% to 30 vol%, 15 vol% to 30 vol%, 20 vol% to 30 vol%, 5 vol% to 25 vol%, 10 vol% to 25 vol%, 15 vol% to 25 vol%, or 20 vol% to 25 vol%.

When the first organic solvent is included in the mixed solvent within the above-described ranges, the low-temperature characteristics of the electrochemical cell including the mixed solvent can be significantly improved due to a synergistic effect with the second organic solvent, which will be described later.

In an embodiment of the present disclosure, the second organic solvent included in the mixed solvent along with the first organic solvent as described above is a compound containing an ether group and an ester group, and may be a low-melting-point organic solvent. In this case, a melting point of the second organic solvent may be -20°C or lower, -30°C or lower, -40°C or lower, or -50°C or lower. While the lower limit is not strictly limited, it may be -150°C or -100°C.

In an embodiment of the present disclosure, the second organic solvent may include at least one selected from the group consisting of a first compound represented by Chemical Formula 1, a second compound represented by Chemical Formula 2, and mixtures thereof:

[Chemical Formula 1]

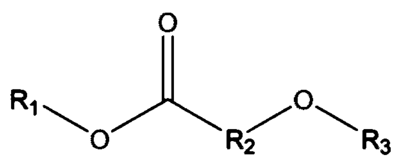

;

[Chemical Formula 2]

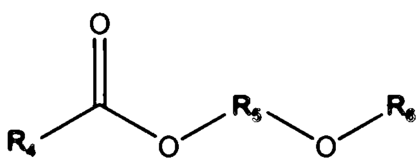

;

Wherein $R_1$ is a linear or branched alkyl group having 1 to 10 carbon atoms; $R_4$ is hydrogen or a linear or branched alkyl group having 1 to 10 carbon atoms; $R_2$ and $R_5$ are each independently a linear or branched alkylene group having 1 to 10 carbon atoms; and $R_3$ and $R_6$ are each independently a linear or branched alkyl group having 1 to 10 carbon atoms.

Since the second organic solvent in the mixed solvent includes at least one of the first compound, the second compound, and the mixtures thereof, it is advantageous in improving the low-temperature characteristics of the electrochemical cell by suppressing a decrease in solubility of the lithium salt in the electrolyte even under low temperature or cryogenic environments.

Specifically, the second organic solvent may include one or more compounds selected from 2-methoxyethyl acetate, 2-ethoxyethyl acetate, propylene glycol monomethyl ether acetate, methyl methoxyacetate, methyl ethoxyacetate, methyl 3-methoxypropionate, β-ethoxy-propionsaeure-methylester, ethyl 2-methoxyacetate, ethyl 2-ethoxyethanoate, 3-methoxy-propionsaeure-ethylester, ethyl 3-ethoxypropionate, ethyl 3-methoxypropionate, methyl 2-methoxypropionate, 3-methoxy-2-methylpropionic acid methyl ester, methyl 3-methoxybutyrate, methyl 3-methoxyisobutyrate, methyl 4-methoxybutanoate, methyl 3-methoxy-2-methylbutyrate, and mixtures thereof.

In a preferred example, the second organic solvent may be a compound satisfying Chemical Formula 1:

[Chemical Formula 1]

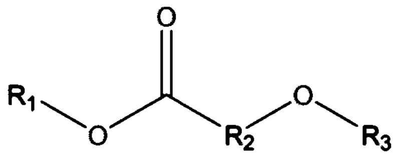
;

Wherein $R_1$ is a linear or branched alkyl group having 1 to 10 carbon atoms; $R_2$ is a linear or branched alkylene group having 1 to 10 carbon atoms; and $R_3$ is a linear or branched alkyl group having 1 to 10 carbon atoms.

Specifically, the compound satisfying Chemical Formula 1 may include one or more selected from methyl methoxyacetate, methyl ethoxyacetate, methyl 3-methoxypropionate, ethyl 2-methoxyacetate, ethyl 2-ethoxyethanoate, ethyl 3-ethoxypropionate, ethyl 3-methoxypropionate, methyl 2-methoxypropionate, methyl 3-methoxybutyrate, methyl 3-methoxyisobutyrate, methyl 4-methoxybutanoate, and methyl 3-methoxy-2-methylbutyrate.

In a more preferred example, the second organic solvent may be a solvent that satisfies Chemical Formula 1 and has a lower or lowest binding energy with lithium ions. Specifically, it may be methyl 3-methoxypropionate.

As described above, when the second organic solvent is a compound that satisfies Chemical Formula 1 while having a lower or lowest binding energy with lithium ions, solvation and desolvation behaviors of lithium ions within the electrolyte may occur more favorably. In particular, immobility of the electrolyte is maintained even at cryogenic temperatures, thereby reducing a decrease in ion transport rate and providing advantages for high-rate charging and discharging.

In an embodiment of the present disclosure, the content of the second organic solvent, based on the total volume of the mixed solvent, may be 50 vol% to 95 vol%, 55 vol% to 95 vol%, 60 vol% to 95 vol%, 65 vol% to 95 vol%, 70 vol% to 95 vol%, 75 vol% to 95 vol%, 80 vol% to 95 vol%, 85 vol% to 95 vol%, 50 vol% to 90 vol%, 55 vol% to 90 vol%, 60 vol% to 90 vol%, 65 vol% to 90 vol%, 70 vol% to 90 vol%, 75 vol% to 90 vol%, 80 vol% to 90 vol%, 85 vol% to 90 vol%, 50 vol% to 85 vol%, 55 vol% to 85 vol%, 60 vol% to 85 vol%, 65 vol% to 85 vol%, 70 vol% to 85 vol%, 75 vol% to 85 vol%, 80 vol% to 85 vol%, 50 vol% to 80 vol%, 55 vol% to 80 vol%, 60 vol% to 80 vol%, 65 vol% to 80 vol%, 70 vol% to 80 vol%, or 75 vol% to 80 vol%.

When the second organic solvent is included in the mixed solvent along with the first organic solvent within the above-described ranges, a degradation in the low-temperature characteristics of the electrochemical cell including the mixed solvent can be minimized due to a synergistic effect with the first organic solvent.

In an embodiment of the present disclosure, for effective improvement of the low-temperature characteristics of the electrochemical cell, a volume ratio of the first organic solvent to the second organic solvent in the mixed solvent may be 1:9 to 5:5.

Specifically, the volume ratio may be 1:9 to 4:6, 1:9 to 3:7, 1:9 to 2.5:7.5, 1.5:8.5 to 5:5, 1.5:8.5 to 4:6, 1.5:8.5 to 3:7, 1.5:8.5 to 2.5:7.5, 2:8 to 5:5, 2:8 to 4:6, 2:8 to 3:7, or 2:8 to 2.5:7.5.

When the first organic solvent is included in an amount of less than 10 vol% or more than 50 vol% based on the total volume of the mixed solvent, the synergistic effect with the second organic solvent is reduced, which may limit the improvement of the low-temperature characteristics of the electrochemical cell. Therefore, it is advantageous for the volume ratio to satisfy the above-described ranges.

In an embodiment of the present disclosure, the lithium salt in the non-aqueous electrolyte composition may include an imide-based lithium salt. Thus, it is advantageous in significantly improving charge and discharge characteristics at a cryogenic temperature of -30°C. That is, the charge and discharge performance at cryogenic temperatures is remarkably improved due to a synergistic effect of the imide-based lithium salt with the mixed solvent including the first and second organic solvents.

In this case, the imide-based lithium salt may include one or more selected from $LiN(SO_2C_2F_5)_2$, $LiN(SO_2CF_3)_2$ [LiTFSI], $LiN(SO_2CF_3)(SO_2C_2F_5)$, $LiN(SO_2CF_3)(SO_2C_3F_7)$, and $LiN(SO_2F)_2$[LiFSI].

In an embodiment of the present disclosure, the lithium salt in the non-aqueous electrolyte composition may have a concentration of 0.1 M to 3.0 M. Specifically, the concentration may be 0.1 M to 3.0 M, 0.1 M to 2.5 M, 0.1 M to 2.0 M, 0.1 M

to 1.5 M, 0.5 M to 3.0 M, 0.5 M to 2.5 M, 0.5 M to 2.0 M, or 0.5 M to 1.5 M, but is not limited thereto.

In a preferred example, the lithium salt may be a mixed lithium salt including a first lithium salt, which is an imide-based lithium salt, and a second lithium salt, which is independently different from the first lithium salt.

Since the mixed lithium salt is included in the non-aqueous electrolyte composition of the present disclosure, it significantly improves the low-temperature characteristics of the electrochemical cell while ensuring high-temperature characteristics at a level comparable to electrolytes including conventional carbonate solvents. Thus, the electrochemical cell can be used with excellent performance over a wide temperature range.

In an embodiment of the present disclosure, the imide-based lithium salt (first lithium salt) may include one or more selected from $LiN(SO_2C_2F_5)_2$, $LiN(SO_2CF_3)_2$[LiTFSI], $LiN(SO_2CF_3)(SO_2C_2F_5)$, $LiN(SO_2CF_3)(SO_2C_3F_7)$, and $LiN(SO_2F)_2$[LiFSI].

In an embodiment of the present disclosure, the second lithium salt may include one or more selected from $LiPF_6$, $LiAsF_6$, $LiPF_4(C_2O_4)$, $LiPF_2(C_2O_4)_2$, $LiBF_4$, $LiB(C_2O_4)_2$, $LiBF_2(C_2O_4)$, $LiClO_4$, $LiBrO_4$, $LiIO_4$, $LiB(C_6H_5)_4$, $LiCH_3SO_3$, and $LiCF_3SO_3$.

In an embodiment of the present disclosure, a molar concentration ratio of the first lithium salt to the second lithium salt in the mixed lithium salt may be 1:9 to 9:1, 1:9 to 7:3, or 1:9 to 5:5.

In a preferred example, the molar concentration ratio of the first lithium salt to the second lithium salt may be 1:9 to 4:6, preferably 2:8 to 4:6, and more preferably 3:7.

When the molar concentration ratio of the first lithium salt to the second lithium salt satisfies the above-described range, the electrochemical cell including the non-aqueous electrolyte composition of the present disclosure may exhibit excellent high-temperature characteristics as well as excellent low-temperature characteristics, thereby enabling excellent electrochemical cell performance over a wide temperature range.

In this case, a molar concentration of the first lithium salt may be 0.5 M or less, or 0.4 M or less. While the lower limit is not strictly limited, it may be 0.1 M or more.

When the molar concentration of the first lithium salt in the mixed lithium salt is less than 0.1 M, there are limitations in improving low-temperature characteristics, and when it exceeds 0.5 M, it may lead to inferior high-temperature characteristics. Therefore, it is advantageous for the first lithium salt to have the above-described molar concentration range.

Since the non-aqueous electrolyte composition of the present disclosure includes the mixed lithium salt and the above-described mixed solvent, it is possible to achieve an optimal effect of forming a protective film to suppress corrosion of the electrode surface. Further, when the molar concentration ratio in the mixed lithium salt and the concentration of the first lithium salt satisfy the above-described ranges, cycle characteristics can be sufficiently improved during high-temperature storage of the electrochemical cell, and an appropriate viscosity of the non-aqueous electrolyte can be obtained. Therefore, impregnability of the electrolyte can be enhanced. Due to the organic relationship between the molar concentration ratio and the concentration of the first lithium salt, the ionic conductivity of the electrolyte increases as the number of charge carriers, *i.e.,* lithium ions, increases up to a certain level. However, beyond a specific concentration range, lithium ions tend to recombine to form ion pairs rather than dissociate, which hinders ionic mobility and causes a decrease in ionic conductivity. Therefore, selecting an appropriate range is critical.

In an embodiment of the present disclosure, the non-aqueous electrolyte composition may further include one or more additives selected from a negative electrode protection agent, a lithium salt stabilizer, a lithium deposition improving agent, an ionic solvation enhancer, a corrosion inhibitor, a wetting agent, a viscosity reducing agent, and a flame retardant. In this case, any additives known in the art may be used without limitation.

For example, the flame retardant included in the additives may be any one selected from a phosphate compound, a phosphonate compound, a phosphazene compound, or mixtures thereof, but is not limited thereto.

Specifically, the phosphate compound may be trimethyl phosphate, triethyl phosphate, tripropyl phosphate, triphenyl phosphate, tricresyl phosphate, trixylenyl phosphate, tris(2,2,2-trifluoroethyl) phosphate, or the like.

The phosphonate compound may be dimethyl methylphosphonate (DMMP), diethyl methylphosphonate (DEMP), or the like.

The phosphazene compound may be hexamethoxy cyclophosphazene (HMPN), hexatrifluoroethoxy cyclotriphosphazene (HTEPN), (ethoxy)pentafluoro cyclotriphosphazene (FPFN), or the like, but is not limited thereto.

Specifically, the additive may be included in an amount of 30 wt% or less, 25 wt% or less, 20 wt% or less, 15 wt% or less, 14 wt% or less, 13 wt% or less, 12 wt% or less, 11 wt% or less, 10 wt% or less, 9 wt% or less, 8 wt% or less, 7 wt% or less, 6 wt% or less, or 5 wt% or less based on the total weight of the non-aqueous electrolyte composition. While the lower limit is not strictly limited, it may be included in an amount of 0.01 wt% or more.

In an embodiment of the present disclosure, the non-aqueous electrolyte composition may be used in a battery selected from a lithium ion battery, a lithium metal battery, a lithium air battery, and a lithium sulfur battery.

A second aspect of the present disclosure provides an electrochemical cell including: a positive electrode; a negative electrode; a separator disposed between the positive electrode and the negative electrode; and the non-aqueous electrolyte composition.

Hereinafter, the present disclosure will be explained in more detail with reference to Examples. However, the following Examples are illustrative only for better understanding of the present disclosure but do not limit the present disclosure.

## [EXAMPLES]

### Example 1: Preparation of Electrolyte for Secondary Battery Using Mixed Solvent

An electrolyte was prepared by adding $LiPF_6$ to an organic solvent in which fluoroethylene carbonate (FEC) and methyl 3-methoxypropionate (MMP) were mixed at a volume ratio of 1:9 to reach a concentration of 1 M.

Subsequently, a coin-type secondary battery was fabricated by a conventional method using a lithium metal oxide with a composition of $LiNi_{0.8}Co_{0.1}Mn_{0.1}O_2$ (hereinafter, NCM811) as a positive electrode active material, artificial graphite as a negative electrode active material, and a polyethylene porous film as a separator.

### Examples 2 to 16: Preparation of Electrolytes for Secondary Batteries with Different Mixed Solvent Volume Ratios

Secondary batteries were fabricated in the same manner as in Example 1 except that electrolytes prepared according to the compositions shown in Table 1 below were used.

### Comparative Examples 1 to 3: Preparation of Electrolytes for Secondary Batteries with Different Mixed Solvent Volume Ratios

Secondary batteries were fabricated in the same manner as in Example 1 except that electrolytes prepared according to the compositions shown in Table 1 below were used.

[Table 1]

| | Solvent (vol%) | | | Lithium Salt | Additive |
|---|---|---|---|---|---|
| Example 1 | MMP (90) | FEC (10) | | 1M $LiPF_6$ | X |
| Example 2 | MMP (90) | FEC (10) | | 1M LiFSI | X |
| Example 3 | MMP (80) | FEC (20) | | | X |
| Example 4 | MMP (90) | FEC (10) | | 1M LiTFSI | X |
| Example 5 | MMP (85) | FEC (15) | | | X |
| Example 6 | MMP (80) | FEC (20) | | | X |
| Example 7 | MMP (75) | FEC (25) | | | X |
| Example 8 | MMP (70) | FEC (30) | | | X |
| Example 9 | MMP (60) | FEC (40) | | | X |
| Example 10 | MEA (90) | FEC (10) | | | X |
| Example 11 | MEA (80) | FEC (20) | | | X |
| Example 12 | MEA (70) | FEC (30) | | | X |
| Example 13 | MMA (90) | FEC (10) | | | X |
| Example 14 | MMA (80) | FEC (20) | | | X |
| Example 15 | MMA (70) | FEC (30) | | | X |
| Example 16 | EEP (80) | FEC (20) | | | X |
| Comparative Example 1 | EC (50) | DEC (50) | | 1M $LiPF_6$ | 5 wt% FEC |
| Comparative Example 2 | EC (30) | EMC (50) | DEC (20) | 1M $LiPF_6$ | 5 wt% VC |
| Comparative Example 3 | EP (80) | FEC (20) | | 1M $LiPF_6$ | 2 wt% VC |

In Table 1, MEA is 2-methoxyethyl acetate, MMA is methyl methoxyacetate, EEP is ethyl 3-ethoxypropionate, EC

is ethylene carbonate, DEC is diethyl carbonate, EMC is ethyl methyl carbonate, VC is vinylene carbonate, and EP is ethyl propionate.

**Test Example 1: Comparative Evaluation of Room-Temperature and Low-Temperature Characteristics**

The secondary batteries fabricated according to Examples 1 to 16 and Comparative Examples 1 to 3 were comparatively evaluated for rate capability at room temperature and low temperature, and the results are summarized in Table 2 below.

To measure the rate capability at room temperature, the batteries were charged at 25°C with a constant current of 0.2 C until the voltage reached 4.3 V, followed by constant voltage charging at 4.3 V until the current reached 0.05 C. Subsequently, the batteries were discharged to 2.8 V at discharge rates of 0.1 C, 0.2 C, 0.5 C, 1 C, 2 C, 3 C, and 4 C, respectively, to measure the discharge capacity at each C-rate.

Herein, the room-temperature rate capability was calculated using Equation 1 below.

$$\text{Room-Temperature Rate Capability (\%)} = (\text{Discharge Capacity at 2 C}/\text{Discharge Capacity at 0.1 C}) \times 100 \quad \text{[Equation 1]}$$

Further, to measure the rate capability at low temperature, the batteries were charged at -30°C with a constant current of 0.2 C until the voltage reached 4.3 V, followed by constant voltage charging at 4.3 V until the current reached 0.05 C. Subsequently, the batteries were discharged to 2.8 V at discharge rates of 0.05 C, 0.1 C, 0.15 C, 0.2 C, and 0.25 C, respectively, to measure the discharge capacity at each C-rate. The low-temperature rate capability was calculated using Equation 2 below.

$$\text{Low-Temperature Rate Capability (\%)} = (\text{Discharge Capacity at 0.25 C}/\text{Discharge Capacity at 0.05 C}) \times 100 \quad \text{[Equation 2]}$$

Furthermore, the secondary batteries were evaluated for low-temperature discharge characteristics by charging the batteries with a constant current of 0.2 C until the voltage reached 4.3 V, followed by constant voltage charging at 4.3 V until the current reached 0.05 C, discharging the batteries at 0.1 C to 2.8 V at both room temperature (25°C) and low temperature (-30°C), and calculating a percentage of low-temperature discharge capacity relative to room-temperature discharge capacity. The results are summarized in Table 2 below.

[Table 2]

| | Room-Temperature (25°C) Rate Capability (%) | Low-Temperature (-30°C) Rate Capability (%) | Low-Temperature (-30°C) Discharge Characteristics (%) |
|---|---|---|---|
| Example 1 | 66.1 | 30.9 | 49.2 |
| Example 2 | 75.8 | 51.4 | 52.1 |
| Example 3 | 80.7 | 53.2 | 61.2 |
| Example 4 | 82.1 | 67.3 | 51.9 |
| Example 5 | 82.5 | 68.5 | 56.8 |
| Example 6 | 85.6 | 70.3 | 64.7 |
| Example 7 | 83.1 | 67.9 | 62.3 |
| Example 8 | 75.8 | 59.6 | 59.6 |
| Example 9 | 68.3 | 49.3 | 49.3 |
| Example 10 | 68.0 | 39.3 | 48.7 |
| Example 11 | 70.6 | 43.5 | 49.4 |
| Example 12 | 63.9 | 36.3 | 45.2 |
| Example 13 | 75.5 | 42.1 | 49.6 |
| Example 14 | 77.8 | 45.2 | 53.2 |

(continued)

| | Room-Temperature (25°C) Rate Capability (%) | Low-Temperature (-30°C) Rate Capability (%) | Low-Temperature (-30°C) Discharge Characteristics (%) |
|---|---|---|---|
| Example 15 | 69.2 | 41.3 | 47.3 |
| Example 16 | 56.8 | 39.8 | 29.5 |
| Comparative Example 1 | 58.7 | N/A | N/A |
| Comparative Example 2 | 69.2 | 19.8 | 15.1 |
| Comparative Example 3 | 62.1 | 22.1 | 26.2 |

Referring to Table 2 above, it can be seen that Examples exhibit superior rate characteristics at both room temperature and low temperature compared to Comparative Examples. It was confirmed that Examples exhibit significantly superior rate characteristics and discharge characteristics, particularly at low temperatures, compared to Comparative Examples.

In the case of Comparative Example 1, low-temperature characteristics could not be measured. Accordingly, an additional test was conducted by exposing the electrolyte of Comparative Example 1 to a cryogenic temperature of -30°C, which confirmed that the electrolyte froze.

Although not shown in the above table, cycle life characteristics were additionally evaluated at room temperature. It was confirmed that all Examples maintained a capacity retention rate of 95% or higher after 150 cycles. In this regard, the cycle life characteristics were evaluated by repeating a total of 150 cycles, where one cycle consisted of charging at room temperature (25°C) with a constant current of 0.5 C to 4.3 V, constant voltage charging at 4.3 V until the current reached 0.05 C, discharging at 0.5 C to 2.8 V, and calculating a percentage of discharge capacity at the 150th cycle relative to discharge capacity at the first cycle.

**Examples 17 to 28 and Comparative Examples 4 and 5: Electrolytes for Secondary Batteries with Different Molar Ratios of Mixed Lithium Salts**

Secondary batteries were independently fabricated by adding different lithium salts to electrolytes prepared according to the compositions shown in Table 3 below.

[Table 3]

| | Solvent (vol%) | | | Lithium Salt | | Additive |
|---|---|---|---|---|---|---|
| Example 17 | MMP (90) | FEC (10) | | 0.9M $LiPF_6$ | 0.1M LiTFSI | X |
| Example 18 | MMP (80) | FEC (20) | | 0.9M $LiPF_6$ | 0.1M LiTFSI | X |
| Example 19 | MMP (90) | FEC (10) | | 0.7M $LiPF_6$ | 0.3M LiTFSI | X |
| Example 20 | MMP (80) | FEC (20) | | 0.7M $LiPF_6$ | 0.3M LiTFSI | X |
| Example 21 | MMP (70) | FEC (30) | | 0.7M $LiPF_6$ | 0.3M LiTFSI | X |
| Example 22 | MMP (80) | FEC (20) | | 0.5M $LiPF_6$ | 0.5M LiTFSI | X |
| Example 23 | MMP (80) | FEC (20) | | 0.3M $LiPF_6$ | 0.7M LiTFSI | X |
| Example 24 | MMP (80) | FEC (20) | | 0.1M $LiPF_6$ | 0.9M LiTFSI | X |
| Example 25 | MEA (80) | FEC (20) | | 0.7M $LiPF_6$ | 0.3M LiTFSI | X |
| Example 26 | MMA (80) | FEC (20) | | 0.7M $LiPF_6$ | 0.3M LiTFSI | X |
| Example 27 | MMP (80) | FEC (20) | | 0.7M $LiPF_6$ | 0.3M LiTFSI | 2 wt% VC |
| Example 28 | MMP (80) | FEC (20) | | 0.7M $LiPF_6$ | 0.3M LiTFSI | 5 wt% FPFN |
| Comparative Example 4 | EC (30) | EMC (50) | DEC (20) | 0.7M $LiPF_6$ | 0.3M LiTFSI | 5 wt% VC |
| Comparative Example 5 | EP (80) | FEC (20) | | 0.7M $LiPF_6$ | 0.3M LiTFSI | 2 wt% VC |

In Table 3, FPFN is (ethoxy)pentafluoro cyclotriphosphazene.

## Test Example 2: Comparative Evaluation of Low-Temperature and High-Temperature Characteristics

The secondary batteries fabricated according to Examples 17 to 28 and Comparative Examples 4 to 5, in addition to Examples 4, 6, 11, and 14, were comparatively evaluated for low-temperature and high-temperature characteristics.
The low-temperature characteristics were calculated and compared in the same manner as the low-temperature rate capability in Test Example 1. The high-temperature characteristics were compared by charging the batteries at 45°C with a constant current of 0.2 C until the voltage reached 4.3 V, followed by constant voltage charging at 4.3 V until the current reached 0.05 C, discharging the batteries to 2.8 V at discharge rates of 0.1 C, 0.2 C, 0.5 C, 1 C, 2 C, 3 C, and 4 C, respectively, and measuring the discharge capacity at each C-rate. The results are summarized in Table 4 below.
Herein, the high-temperature rate capability was calculated using Equation 3 below.

High-Temperature (45°C) Rate Capability (%) = (Discharge Capacity at 2 C/ Discharge Capacity at 0.1 C) $\times$ 100 [Equation 3]

[Table 4]

| | Low-Temperature (-30°C) Rate Capability (%) | High-Temperature (45°C) Rate Capability (%) |
|---|---|---|
| Example 4 | 67.3 | 62.1 |
| Example 6 | 70.3 | 63.9 |
| Example 11 | 43.5 | 49.8 |
| Example 14 | 45.2 | 54.2 |
| Example 17 | 46.2 | 70.3 |
| Example 18 | 47.5 | 71.9 |
| Example 19 | 65.9 | 79.2 |
| Example 20 | 69.6 | 83.1 |
| Example 21 | 57.2 | 78.6 |
| Example 22 | 67.8 | 77.9 |
| Example 23 | 68.3 | 62.8 |
| Example 24 | 68.9 | 60.3 |
| Example 25 | 42.6 | 56.3 |
| Example 26 | 44.6 | 66.9 |
| Example 27 | 69.2 | 78.3 |
| Example 28 | 68.2 | 79.4 |
| Comparative Example 4 | 20.9 | 78.1 |
| Comparative Example 5 | 21.2 | 46.1 |

Referring to Table 4 above, it can be seen that when the composition includes a mixed lithium salt and satisfies a specific molar ratio in the mixed lithium salt, high-temperature rate capability can be significantly improved while maintaining excellent low-temperature rate capability.
Specifically, although not shown in Table 4 above, the high-temperature rate capabilities of Comparative Examples 2 and 3 in which a single lithium salt was used instead of a mixed lithium salt were 82.1% and 45.2%, respectively. It can also be seen that even when a mixed lithium salt is used as in Comparative Examples 4 and 5, there is little effect on improving high-temperature rate capability, and low-temperature rate capability remains at a similar level.
**A** comparison between Comparing Example 6 and Example 20 shows that while low-temperature rate capability remains at a similar level, high-temperature rate capability is significantly improved in Example 20 in which the mixed lithium salt is used at a specific molar ratio. In particular, it can be seen that Example 20 exhibits high-temperature characteristics equivalent to those of the electrolytes used in Comparative Example 1 or Comparative Example 2. That is, compared to Comparative Examples 1 and 2 which exhibit very inferior low-temperature characteristics, Example 20

exhibits significantly superior low-temperature characteristics while maintaining high-temperature characteristics at similar levels.

Further, it was observed that when the electrolyte includes a mixed lithium salt satisfying a specific molar ratio, room-temperature rate capability is equivalent to that of an electrolyte including a single lithium salt.

As can be seen from Table 2 and Table 4 above, low-temperature characteristics and high-temperature characteristics of organic electrolytes are generally in a trade-off relationship. However, the non-aqueous electrolyte composition according to an embodiment of the present disclosure includes the mixed lithium salt, which selectively includes an imide-based lithium salt and a lithium salt different therefrom at a specific molar ratio, together with the mixed solvent. Accordingly, the composition exhibits improved low-temperature characteristics and excellent high-temperature characteristics. Unlike conventional technologies, it provides superior performance over a wide temperature range, including both extreme low-temperature and high-temperature environments.

The above description of the present disclosure is provided for the purpose of illustration, and it would be understood by a person with ordinary skill in the art that various changes and modifications may be made without changing technical conception and essential features of the present disclosure. Thus, it is clear that the above-described examples are illustrative in all aspects and do not limit the present disclosure. For example, each component described to be of a single type can be implemented in a distributed manner. Likewise, components described to be distributed can be implemented in a combined manner.

The scope of the present disclosure is defined by the following claims rather than by the detailed description of the embodiment. It shall be understood that all modifications and embodiments conceived from the meaning and scope of the claims and their equivalents are included in the scope of the present disclosure.

## Claims

**1.** A non-aqueous electrolyte composition, comprising:

a lithium salt;
a first organic solvent including at least one selected from a cyclic carbonate compound and a cyclic ester compound; and
a second organic solvent including a compound containing an ether group and an ester group.

**2.** The non-aqueous electrolyte composition of Claim 1,

wherein the second organic solvent includes at least one selected from a group consisting of a first compound represented by Chemical Formula 1, a second compound represented by Chemical Formula 2, and mixtures thereof:

[Chemical Formula 1]

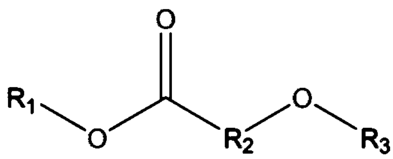

;

[Chemical Formula 2]

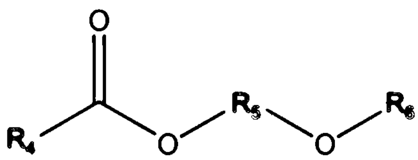

;

wherein $R_1$ is a linear or branched alkyl group having 1 to 10 carbon atoms;
$R_4$ is hydrogen or a linear or branched alkyl group having 1 to 10 carbon atoms;
$R_2$ and $R_5$ are each independently a linear or branched alkylene group having 1 to 10 carbon atoms; and

$R_3$ and $R_6$ are each independently a linear or branched alkyl group having 1 to 10 carbon atoms.

**3.** The non-aqueous electrolyte composition of Claim 1,

wherein the second organic solvent is a compound satisfying Chemical Formula 1:

[Chemical Formula 1]

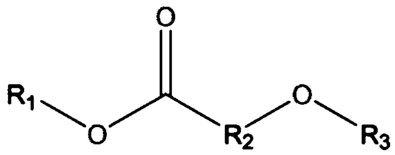

;

wherein $R_1$ is a linear or branched alkyl group having 1 to 10 carbon atoms;
$R_2$ is a linear or branched alkylene group having 1 to 10 carbon atoms; and
$R_3$ is a linear or branched alkyl group having 1 to 10 carbon atoms.

**4.** The non-aqueous electrolyte composition of Claim 1,
wherein the lithium salt is a mixed lithium salt including a first lithium salt, which is an imide-based lithium salt, and a second lithium salt, which is independently different from the first lithium salt.

**5.** The non-aqueous electrolyte composition of Claim 4,
wherein the imide-based lithium salt includes one or more selected from $LiN(SO_2C_2F_3)_2$, $LiN(SO_2CF_3)_2$, $LiN(SO_2CF_3)(SO_2C_2F_3)$, $LiN(SO_2CF_3)(SO_2C_3F_7)$, and $LiN(SO_2F)_2$.

**6.** The non-aqueous electrolyte composition of Claim 4,
wherein the second lithium salt includes one or more selected from $LiPF_6$, $LiAsF_6$, $LiPF_4(C_2O_4)$, $LiPF_2(C_2O_4)_2$, $LiBF_4$, $LiB(C_2O_4)_2$, $LiBF_2(C_2O_4)$, $LiClO_4$, $LiBrO_4$, $LiIO_4$, $LiB(C_6H_5)_4$, $LiCH_3SO_3$, and $LiCF_3SO_3$.

**7.** The non-aqueous electrolyte composition of Claim 4,
wherein a molar concentration ratio of the first lithium salt to the second lithium salt in the mixed lithium salt is 1:9 to 9:1.

**8.** The non-aqueous electrolyte composition of Claim 7,
wherein a molar concentration of the first lithium salt is 0.5 M or less.

**9.** The non-aqueous electrolyte composition of Claim 1,
wherein the cyclic carbonate compound includes one or more selected from ethylene carbonate, propylene carbonate, butylene carbonate, vinylene carbonate, fluoroethylene carbonate, difluoroethylene carbonate, trifluoroethylene carbonate, tetrafluoroethylene carbonate, 3,3,3-trifluoropropylene carbonate, and 1-fluoropropylene carbonate.

**10.** The non-aqueous electrolyte composition of Claim 1,
wherein the cyclic ester compound includes one or more selected from γ-butyrolactone, γ-valerolactone, σ-valerolactone, γ-caprolactone, ε-caprolactone, and 4-vinyl-1,3-dioxolan-2-one.

**11.** The non-aqueous electrolyte composition of Claim 1,
wherein a volume ratio of the first organic solvent to the second organic solvent is 1:9 to 4:6.

**12.** The non-aqueous electrolyte composition of Claim 1,
wherein the composition further includes one or more additives selected from a negative electrode protection agent, a lithium salt stabilizer, a lithium deposition improving agent, an ionic solvation enhancer, a corrosion inhibitor, a wetting agent, a viscosity reducing agent, and a flame retardant.

**13.** The non-aqueous electrolyte composition of Claim 12,
wherein the flame retardant is any one selected from a group consisting of a phosphate compound, a phosphonate compound, a phosphazene compound, or mixtures thereof.

**14.** The non-aqueous electrolyte composition of Claim 1, wherein the non-aqueous electrolyte composition is used in a battery selected from a lithium ion battery, a lithium metal battery, a lithium air battery, and a lithium sulfur battery.

**15.** An electrochemical cell, comprising:

a positive electrode;
a negative electrode;
a separator disposed between the positive electrode and the negative electrode; and
the non-aqueous electrolyte composition of Claim 1.

**INTERNATIONAL SEARCH REPORT**

International application No.
**PCT/KR2024/009494**

**A. CLASSIFICATION OF SUBJECT MATTER**

**H01M 10/0569**(2010.01)i; **H01M 10/0568**(2010.01)i; **H01M 10/42**(2006.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 10/0569(2010.01); H01M 10/05(2010.01); H01M 10/052(2010.01); H01M 10/0567(2010.01); H01M 10/0568(2010.01); H01M 10/40(2006.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (registry, caplus) & keywords: 전해질(electrolyte), 유기용매(organic solvent), 카보네이트(carbonate), 에스테르(ester), 에테르(ether), 리튬염(lithium salt)

**C. DOCUMENTS CONSIDERED TO BE RELEVANT**

| Category* | Citation of document, with indication, where appropriate, of the relevant passages | Relevant to claim No. |
|---|---|---|
| X<br>Y | KR 10-2013-0130775 A (DOW GLOBAL TECHNOLOGIES LLC) 02 December 2013 (2013-12-02)<br>See claims 1, 12, 14 and 15; and paragraphs [0034], [0035], [0052], [0058] and [0065]. | 1-3,9-15<br>4-8 |
| Y | KR 10-2021-0100313 A (LG ENERGY SOLUTION, LTD. et al.) 17 August 2021 (2021-08-17)<br>See claims 1 and 3-6; and paragraph [0100]. | 4-8 |
| X | KR 10-2008-0088489 A (GM GLOBAL TECHNOLOGY OPERATIONS, INC.) 02 October 2008 (2008-10-02)<br>See claims 1, 2, 14 and 16; and paragraph [0029]. | 1-3,9-15 |
| Y | KR 10-2023-0115234 A (LG ENERGY SOLUTION, LTD.) 02 August 2023 (2023-08-02)<br>See claims 1 and 2; and paragraphs [0020] and [0021]. | 4-8 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 October 2024** | **07 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
**PCT/KR2024/009494**

**C. DOCUMENTS CONSIDERED TO BE RELEVANT**

| Category* | Citation of document, with indication, where appropriate, of the relevant passages | Relevant to claim No. |
|---|---|---|
| A | JP 08-130036 A (FUJI PHOTO FILM CO., LTD.) 21 May 1996 (1996-05-21)<br>See claim 1. | 1-15 |

Form PCT/ISA/210 (second sheet) (July 2022)

**INTERNATIONAL SEARCH REPORT**
**Information on patent family members**

International application No.
**PCT/KR2024/009494**

| Patent document cited in search report | | Publication date (day/month/year) | Patent family member(s) | | | Publication date (day/month/year) |
|---|---|---|---|---|---|---|
| KR 10-2013-0130775 | A | 02 December 2013 | CA | 2821958 | A1 | 21 June 2012 |
| | | | CN | 103262329 | A | 21 August 2013 |
| | | | CN | 103262329 | B | 10 February 2016 |
| | | | EP | 2652832 | A1 | 23 October 2013 |
| | | | JP | 2014-503964 | A | 13 February 2014 |
| | | | JP | 5886870 | B2 | 16 March 2016 |
| | | | US | 2013-0260229 | A1 | 03 October 2013 |
| | | | US | 9472813 | B2 | 18 October 2016 |
| | | | WO | 2012-082760 | A1 | 21 June 2012 |
| KR 10-2021-0100313 | A | 17 August 2021 | | None | | |
| KR 10-2008-0088489 | A | 02 October 2008 | CN | 101276939 | A | 01 October 2008 |
| | | | CN | 101276939 | B | 06 April 2011 |
| | | | EP | 1978588 | A1 | 08 October 2008 |
| | | | KR | 10-1015589 | B1 | 17 February 2011 |
| | | | US | 2008-0241699 | A1 | 02 October 2008 |
| | | | US | 7722994 | B2 | 25 May 2010 |
| KR 10-2023-0115234 | A | 02 August 2023 | | None | | |
| JP 08-130036 | A | 21 May 1996 | | None | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 100810634